# EUROPÄISCHE PATENTSCHRIFT

(11) **EP 2 928 943 B1**
(45) Veröffentlichungstag und Bekanntmachung des Hinweises auf die Patenterteilung: **03.04.2019**
(21) Anmeldenummer: 13802908.7
(22) Anmeldetag: 27.11.2013
(51) Int. Cl.: C08G 77/04, C09J 183/04, C09K 3/10, C08L 83/04, C08G 77/16, C08G 77/18

(54) **SILIKONFORMULIERUNG MIT LAGERSTABILITÄT**
SILICONE FORMULATION HAVING STORAGE STABILITY
FORMULE DE SILICONE AVEC STABILITÉ EN STOCKAGE

(30) Priorität: 04.12.2012 EP 12195526
(43) Veröffentlichungstag der Anmeldung: 14.10.2015
(73) Patentinhaber: Sika Technology AG, 6340 Baar (CH)
(72) Erfinder: FRIEDEL, Manuel, CH-8048 Zürich (CH)
(74) Vertreter: Sika Patent Attorneys
(86) Internationale Anmeldenummer: PCT/EP2013/074870
(87) Internationale Veröffentlichungsnummer: WO 2014/086638

(56) Entgegenhaltungen:
- EP-A2- 0 861 876
- EP-A2- 1 191 066
- WO-A2-2004/015002
- JP-A- 2010 100 667
- SU-A1- 730 764
- US-A1- 2012 111 498
- VINODH RAJENDRA ET AL: "Nearly Monodisperse Silica Microparticles Form in Silicone (Pre)elastomer Mixtures", LANGMUIR, Bd. 28, Nr. 2, 17. Januar 2012 (2012-01-17), Seiten 1470-1477, XP055061770, ISSN: 0743-7463, DOI: 10.1021/la2035505

## Beschreibung

### Technisches Gebiet

Die Erfindung betrifft ein- oder zweikomponentige Silikonformulierungen, insbesondere RTV-Silikone und deren Verwendung sowie eine entsprechende Silikonkomponente.

### Stand der Technik

Silikone sind bekannte Zusammensetzungen, welche schon lange als Kleb- oder Dichtstoffe eingesetzt werden. Solche Silikone können als ein- oder zweikomponentige Silikonformulierungen gestaltet werden und enthalten als Hauptkomponenten ein Polyorganosiloxan und einen Vernetzer. Es wird zwischen kaltvernetzenden RTV-Silikonen (RTV = raumtemperaturvernetzend bzw. -vulkanisierend) und warmvernetzenden HTV-Silikonen (HTV = hochtemperaturvernetzend bzw. -vulkanisierend) unterschieden. Ein- und zweikomponentige RTV-Silikone werden auch als RTV 1-Silikone bzw. RTV 2-Silikone bezeichnet.

Es ist bekannt, feuchtigkeitshärtende RTV-Silikone zu formulieren, die funktionelle Silane, insbesondere tri- und tetrafunktionelle Silane als Vernetzer enthalten. Ebenfalls bekannt sind Formulierungen, die funktionelle Oligosiloxane, also Oligomere der funktionellen Silane, enthalten. Vorteil solcher oligomeren Verbindungen ist unter anderem eine deutliche Reduktion der bei der Aushärtereaktion freiwerdenden, niedermolekularen Spaltprodukte und damit der VOC-Emissionen. Weiter können Silikonformulierungen mit höherem Flammpunkt und damit verbesserter Arbeitssicherheit formuliert werden.

Allerdings sind Silikon-Polymere, insbesondere OH-terminierte Polydimethylsiloxane, mit Viskositäten zwischen 1000 und 350000 mPas, mit den funktionellen Oligosiloxanen im Gegensatz zu den Monomeren häufig nicht gut mischbar. Mischungen dieser Oligomere mit Silikonölen zeigen nach kurzer Zeit Phasentrennung, sind also nicht lagerstabil. Damit gehen veränderte Eigenschaften der formulierten RTV-Silikone einher, wie verringerte Reaktivität und verringerte Haftung.

EP-A2-1191066 beschreibt die Verwendung von aminofunktionellen Oligosiloxanen als Haftvermittler in Kleb- und Dichtmassen auf Basis von Organopolysiloxanen und Silanvernetzern. Es werden keine Möglichkeiten zur Verbesserung der Homogenität der Mischungen aufgezeigt.

EP-A1-2439223 betrifft Amin/Epoxy-Co-Polymere, welche Siloxan-Funktionalitäten tragen. Beschrieben werden unterschiedliche Anwendungen dieser Amin/Epoxy-Co-Polymere, z.B. als Dispergiermittel zur Dispergierung von Pigmenten oder Füllstoffen in Silikonölen.

WO 2011/006808 betrifft vernetzbare Zusammensetzungen auf Basis von Organosiliciumverbindungen, die silylterminierte Polymere enthalten, und beschreibt die Verwendung von Aminoalkylalkoxysilanen und deren Hydrolysate als Haftvermittler.

US-A1-2003/072873 beschreibt die Herstellung von funktionellen Siloxanen und deren Verwendung als Haftvermittler. In EP-A2-0997469 werden funktionelle Oligosiloxane und deren Verwendung als Haftvermittler in Kleb- und Dichtmassen beschrieben.

In der US 4710405 wird die Verwendung von aminofunktionalisierten Poly-(dimethylsiloxan)-co-Oligomeren zur Verbesserung der Haftung von Silikonemulsionen beschrieben. Der Einsatz oligomerer Silanvernetzer wird nicht beschrieben.

EP-A2-1136514 betrifft die Herstellung von Poly(3-aminopropylorganosiloxanen) und verweist auf die mögliche Verwendung in Beschichtungen und Klebstoffen. EP-A1-0675128 bezieht sich auf die Herstellung von wässrigen Silanpolymeren, bei der funktionelle Silane als Stabilisierungsmittel eingesetzt werden.

EP-A1-1894966 beschreibt die Verwendung eines Kondensationsprodukts von funktionellen Oligosiloxanen als Primer für den Haftungsaufbau insbesondere von Polyurethan-basierten Kleb- und Dichtstoffen auf Substraten.

Wie vorstehend erläutert, zeigen Mischungen von oligomeren Silanvernetzern mit Silikonölen nach kurzer Zeit Phasentrennung, sind also nicht lagerstabil, womit weitere Nachteile verbunden sind. Für dieses Problem gibt es im Stand der Technik keine Lösung.

JP 2010-100667 A betrifft eine Siliconformulierung umfassend ein Organopolysiloxan mit Hydroxy- oder Alkoxygruppen, ein hydrolysierbares Silan oder ein Teilhydrolysat davon und ein Hydroxyl- oder Alkoxygruppen enthaltendes Dimethylsiloxan mit einem Polymerisationsgrad von 100-500.

V. Rajendra et al., LANGMUIR, Bd. 28, Nr. 2, 2012, S. 1470-1477, beschreibt eine einkomponentige Siliconformulierung umfassend OH-terminiertes Polydimethylsiloxan, Tetraethylorthosilicat und Aminopropyl-terminiertes Dimethylsiloxan.

In EP 0861876 A2 wird eine Siliconformulierung beschrieben, die ein vernetzbares Polydiorganosiloxan mit OH-Endgruppen, einen monomeren Silanvernetzer oder ein Kondensat davon und ein Alkoxgruppen-haltiges Oligodiorganosiloxan enthält.

US 2012/111498 A1 betrifft zweikomponentige Zusammensetzungen umfassend ein Hydroxy-terminiertes Polydimethylsiloxan und hydrolysierbare Silanvernetzer oder ein Kondensationsprodukt davon.

WO 2004/015002 beschreibt wärmeleitfähige Silikonelastomer-Zusammensetzungen, die Organosiloxan-Oligomere als Haftvermittler enthalten können.

### Darstellung der Erfindung

Aufgabe der vorliegenden Erfindung ist es daher, diese Phasentrennung zu vermeiden und die Mischbarkeit der oligomeren Siloxanvernetzer mit Silikonölen zu vergrößern und damit die Lagerstabilität zu verbessern. Überraschenderweise wurde gefunden, dass der Zusatz bestimmter funktionalisierter Oligodimethylsiloxane die Mischbarkeit funktioneller Oligosiloxane mit Silikonölen verbessert.

Die Aufgabe wird somit gelöst durch eine ein- oder zweikomponentige Silikonformulierung wie in Anspruch 1 definiert. Ansprüche 2 bis 11 definieren weitere Ausführungsarten der Erfindung.

Silikonkomponente wird im Anspruch 12 definiert. Die Verwendung eines funktionalisierten Oligodimethylsiloxans als Phasenvermittler für eine Mischung wird im Anspruch 13 und die Verwendung einer ein- oder zweikomponentigen Silikonformulierung wird im Anspruch 14 definiert.

### Weg zur Ausführung der Erfindung

Bei der erfindungsgemäßen Silikonformulierung handelt es sich um eine ein- oder zweikomponentige Formulierung, d.h. die Silikonformulierung besteht wie üblich und im Stand der Technik bekannt aus einer Komponente oder aus zwei gesonderten Komponenten. Bei einer zweikomponentigen Silikonformulierung ist es bevorzugt, dass die erste Komponente oder Polymerkomponente A das mindestens eine Polydiorganosiloxan umfasst und die zweite Komponente oder Härterkomponente B das mindestens eine oligomere Siloxan und das mindestens eine funktionalisierte Oligodimethylsiloxan umfasst. Bei einer einkomponentigen Silikonformulierung umfasst die eine Komponente naturgemäß das Polydiorganosiloxan, das oligomere Siloxan und das funktionalisierte Oligodimethylsiloxan.

Bei der ein- oder zweikomponentigen Silikonformulierung handelt es sich bevorzugt um eine bei Raumtemperatur härtende Silikonformulierung, d.h. ein RTV-Silikon, wobei ein einkomponentiges RTV-Silikon auch als RTV 1-Silikon und ein zweikomponentiges RTV-Silikon auch als RTV 2-Silikon bezeichnet werden.

Bei den zweikomponentigen Silikonformulierungen wird die Vernetzung des Polyorganosiloxans durch die Vermischung der das Polyorganosiloxans enthaltenden Polymerkomponente A mit der den Vernetzer enthaltenden Härterkomponente B gestartet. Als zweikomponentige Silikonformulierungen sind kondensationsvernetzende RTV 2-Systeme und additionsvernetzende RTV 2-Systeme, wobei als zweikomponentige Systeme erfindungsgemäß kondensationsvernetzende zweikomponentige Silikonformulierungen bevorzugt sind. Bei den einkomponentigen Silikonformulierungen handelt es sich insbesondere um feuchtigkeitshärtende Systeme, bei denen die Vernetzung des Polydiorganosiloxans durch den Kontakt mit Feuchtigkeit erfolgt.

Die ein- oder zweikomponentige Silikonformulierung umfasst ein oder mehrere Polydiorganosiloxane. Solche Polydiorganosiloxane für ein- oder zweikomponentige Silikonformulierungen sind dem Fachmann gut bekannt. Die Polydiorganosiloxane sind vernetzbare Polydiorganosiloxane. Bei den Polydiorganosiloxanen handelt es sich um Polydimethylsiloxane. Wie dem Fachmann bekannt, können solche Polydimethylsiloxane zur Einstellung der Eigenschaften modifiziert werden, indem ein Teil oder alle der Methylgruppen durch andere Gruppen, wie z.B. Vinyl, Phenyl, 3,3,3-Trifluorpropyl ersetzt ist.

Die Polydiorganosiloxane weisen insbesondere funktionelle Gruppen auf, über die eine Vernetzung möglich ist. Insbesondere weisen die Polydiorganosiloxane zwei oder mehr funktionelle Gruppen auf, über die eine Vernetzung möglich ist. Unter funktionellen Gruppen werden hier insbesondere Gruppen verstanden, die mit funktionellen Gruppen des Vernetzers unter Bildung einer Bindung reagieren können, wobei die Reaktion gegebenenfalls durch Hydrolyse, Alkoholyse oder eine andere Abspaltungsreaktion bei der funktionellen Gruppe des Polydiorganosiloxans und/oder des Vernetzers eingeleitet wird. Bevorzugt erfolgt die Reaktion zwischen der funktionellen Gruppe des Polydiorganosiloxans und der funktionellen Gruppe des Vernetzers durch eine Kondensationsreaktion.

Diese funktionellen Gruppen können in einer Seitengruppe oder einer Endgruppe des Polydiorganosiloxans vorliegen, wobei endständige funktionelle Gruppen bevorzugt sind (α,ω-funktionelle Polydiorganosiloxane). Als endständig funktionelle Gruppen eignen sich alle in der Technik bekannten. Beispiele für solche funktionellen Gruppen des Polydiorganosiloxans, bei denen es sich bevorzugt um endständige funktionelle Gruppen handelt, sind Hydrido-, Hydroxy-, Vinyl-, Alkoxy-, Acetoxy- und Ketoximgruppen, wobei Hydroxygruppen bevorzugt sind. Beispiele sind nachstehend aufgeführt. Das Polydiorganosiloxan weist z.B. an jedem Ende 1 bis 3, bevorzugt 1 oder 2, solcher funktioneller Gruppen auf.

Im allgemeinen eignen sich als Polydiorganosiloxane für die erfindungsgemäßen Silikonformulierungen z.B. mindestens ein Polydiorganosiloxan der Formel

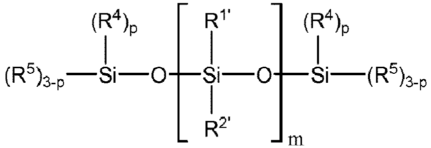

Dabei steht der Rest R⁴ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen, wobei Gruppen ausgewählt aus Alkylresten mit 1 bis 5, insbesondere mit 1 bis 3, C-Atomen, bevorzugt Methyl, Vinyl, Aryl, bevorzugt Phenyl, und Alkaryl wie Benzyl, bevorzugt sind. Die Reste R^{1'} und R^{2'} stehen für Methylgruppen, wobei gegebenenfalls ein Teil der Alkylreste, wie Methyl, durch andere Gruppen wie Vinyl oder Phenyl ersetzt sein kann. Die Reste R⁴ stehen insbesondere für Phenyl-, Vinyl oder für Methylgruppen.
Die Reste R⁵ stehen unabhängig voneinander für Hydroxylgruppen oder für Alkoxy-, Acetoxy- oder Ketoximgruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen. R⁵ ist bevorzugt Hydroxy.
Bevorzugte Alkoxygruppen sind C₁-C₅-Alkoxygruppen, besonders bevorzugt sind Methoxy, Ethoxy und Propoxy. Bevorzugte Ketoximgruppen sind Dialkylketoximgruppen, deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl-, n-Propyl- oder für eine iso-Butylgruppe steht. Meist bevorzugt steht die Ketoximgruppe für eine Ethyl-methylketoximgruppe.
Der Index p steht für einen Wert von 0, 1 oder 2. Der Index m kann in breiten Bereichen in Abhängigkeit vom Einsatzzweck gewählt werden, im allgemeinen so, dass ein Silikonöl erhalten wird. Der Index m kann z.B. im Bereich von 10 bis 10000 und bevorzugt 100 bis 1000 liegen. Der Index m wird bevorzugt so gewählt, dass das Polydiorganosiloxan die nachstehend angegebene Viskosität aufweist.

Die Viskosität der eingesetzten Polydiorganosiloxane kann in Abhängigkeit vom Einsatzzweck in breiten Bereichen variieren. Das erfindungsgemäß eingesetzte Polyorganosiloxan bzw. Polydiorganosiloxan kann bei einer Temperatur von 23 °C z.B. eine Viskosität von 10 bis 500'000 mPa.s, bevorzugt 1000 bis 350'000 mPa.s und insbesondere von 6'000 bis 120'000 mPa.s, aufweisen.

Die hier und im folgenden angegebenen Viskositäten können in Anlehnung an DIN 53018 bestimmt werden. Die Messung kann mittels Kegel-Platte-Viskosimeter MCR101 der Firma Anton-Paar, Österreich, mit Kegel-Typ CP 25-1 bei 23°C erfolgen. Die angegebenen Viskositätswerte beziehen sich auf eine Scherrate von 0,5 s⁻¹.

Bevorzugt eingesetzte Polydiorganosiloxane sind Polydimethylsiloxane mit funktionellen Endgruppen, wie Hydrido, Hydroxy-, Alkoxy-, Acetoxy- und Ketoximgruppen, wobei Hydroxygruppen bevorzugt sind. Besonders bevorzugt sind OH-terminierte Polydimethylsiloxane (α,ω-hydroxyfunktionelle Polydimethylsiloxane). Wie vorstehend erläutert können solche Polydimethylsiloxane gemäß dem Stand der Technik durch teilweisen Einbau anderer Gruppen wie Phenyl anstelle von Methyl modifiziert sein.

Die ein- oder zweikomponentige Silikonformulierung umfasst weiter ein oder mehrere oligomere Siloxane als Vernetzer für das Polyorganosiloxan, wobei das oligomere Siloxan ein Kondensationsprodukt von monomeren Silanvernetzern ist. Monomere Silanvernetzer und auch oligomere Kondensationsprodukte davon sind als Vernetzer für Silikonformulierungen bekannt.

Monomere Silanvernetzer sind im allgemeinen Silanverbindungen, die zwei oder mehr, z.B. drei oder mehr und bevorzugt 3 oder 4, funktionelle Gruppen enthalten. Unter funktionellen Gruppen werden hier insbesondere Gruppen verstanden, die mit funktionellen Gruppen des Polyorganosiloxans unter Bildung einer Bindung reagieren können, wobei die Reaktion gegebenenfalls durch Hydrolyse, Alkoholyse oder eine andere Abspaltungsreaktion bei der funktionellen Gruppe des Polydiorganosiloxans und/oder des Vernetzers eingeleitet wird. Die funktionellen Gruppen können an jeder Stelle des Silanvernetzers vorliegen, bevorzugt sind sie an einem Si-Atom des monomeren Silanvernetzers gebunden.

Beispiele für funktionelle Gruppen, die ein monomerer Silanvernetzer aufweisen kann, sind Alkoxygruppen, wie C₁₋₅-Alkoxygruppen, bevorzugt Methoxy-, Ethoxy- oder Propoxygruppen, Acetoxygruppen, Amidgruppen, bevorzugt N-Alkylamidgruppen, insbesondere N-Methylbenzamid- oder N-Methylacetamidgruppen, Amingruppen, bevorzugt alkylierte Amingruppen wie beispielsweise Cyclohexylamin, insbesondere aber dialkylierte Amingruppen wie beispielsweise N,N-Diethylamin, Halogen-Atome, insbesondere Chlor und/oder Brom-Atome sowie Hydrido-Substituenten oder Oximgruppen,. Als Beispiele für Oximgruppen wird auf die vorstehend beschriebenen bevorzugten Ketoximgruppen verwiesen. Diese funktionellen Gruppen sind im allgemeinen direkt an einem Si-Atom des monomeren Silanvernetzers gebunden.

Monomere Silanvernetzer können z.B. eine der folgenden allgemeinen Formeln (I) bis (III) aufweisen.

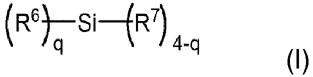

(R⁷)₃-Si-R⁸-Si-(R⁷)₃ (II)

N(H)ₙ(Si-(R⁷)₃)₃₋ₙ (III)

Dabei steht der Rest R⁶ unabhängig voneinander für einen linearen oder verzweigten, einwertigen Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Beispiele für R⁶ sind Alkylgruppen mit 1 bis 5 C-Atomen, bevorzugt Methyl, Ethyl oder Propyl, Vinyl, Arylgruppen, wie Phenyl, Cycloalkylgruppen, wie Cyclohexyl, sowie substituierte Alkylgruppen, mit 1 bis 8 C-Atomen, bevorzugt Methyl, Ethyl oder Propyl, die mit einem oder mehreren Substituenten, wie gegebenenfalls substituiertes Amino (NH₂, NHR, NR₂, wobei R unabhängig voneinander Alkyl, Aryl oder Cycloalkyl ist), Mercapto, Glycidoxy, Methacrylat, Acrylat oder Carbamato, funktionalisiert sind.

Der Rest R⁷ steht unabhängig voneinander für eine Hydroxylgruppe oder für eine Alkoxy-, Acetoxy- oder Ketoximgruppe mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist. Bevorzugte Ketoximgruppen und Alkoxygruppen sind bereits vorstehend beschrieben worden.

Weiterhin steht der Index q für einen Wert von 0 bis 4, mit der Maßgabe, dass falls q für einen Wert von 3 oder 4 steht, mindestens q-2 Reste R⁶ jeweils mindestens eine mit der funktionellen Gruppen des Polyorganosiloxans reaktive Gruppe aufweisen. Insbesondere steht q für einen Wert von 0, 1 oder 2, bevorzugt für einen Wert von 0 oder 1.

R⁸ ist eine zweiwertige Alkylengruppe, z.B. eine C₁₋₆-Alkylengruppe, insbesondere Methylen, Ethylen oder Propylen, eine Arylengruppe, wie Phenylen, oder eine Cycloalkylengruppe, wobei Alkylen bevorzugt ist. Der Index n steht für 0, 1 oder 2, bevorzugt 1.

Konkrete Beispiele für monomere Silanvernetzer sind Methyltrimethoxysilan, Vinyltrimethoxysilan, Phenyltrimethoxysilan, Propyltrimethoxysilan, 3-Mercaptopropyltrimethoxysilan, 3-Aminopropyltrimethoxysilan, 3-Methacryloxypropyltrimethoxysilan, 3-Glycidoxypropyltrimethoxysilan, 2-Aminoethyl-3-aminopropyltrimethoxysilan, 1,2-Bis-(trimethoxysilyl)ethan, Bis-(trimethoxysilylpropyl)amin, N-(n-Butyl)-3-aminopropyltrimethoxysilan, N-Cyclohexylaminomethyltrimethoxysilan, Methacryloxymethyltrimethoxysilan, O-Methylcarbamatomethyltrimethoxysilan oder die entsprechenden Verbindungen, bei denen die Methoxygruppe durch Ethoxy, Propoxy, Oxim bzw. Ketoxim ersetzt ist. Weitere Beispiele sind Tetramethoxysilan, Tetraethoxysilan und Tetrapropoxysilan.

Bei dem oligomeren Siloxan als Vernetzer handelt es sich um ein Kondensationsprodukt von einem oder mehreren solcher monomeren Silanvernetzer. Solche oligomeren Siloxane sind bekannt und im Handel erhältlich, z.B. unter den Handelsnamen Dynasylan® 1146, Dynasylan® 6490 der Firma Evonik Degussa GmbH. Oligomere von funktionellen Silanen sind kompliziert aufgebaute 3-dimensionale Verbindungen. Das oligomere Siloxan kann z.B. aus Hydrolyse und Kondensation von einem oder mehreren gleichen oder unterschiedlichen monomeren Silanvernetzern gebildet werden.

Das oligomere Siloxan enthält funktionelle Gruppen, die aus dem monomeren Silanvernetzer stammen. Beispielsweise führt eine erste Kondensation von zwei Tetramethoxysilan-Molekülen zu einem Dimer, das sechs funktionelle Gruppen enthält; aus jeweils einer funktionellen Gruppe jedes Moleküls wird durch Kondensation die Verknüpfung gebildet wird. Wie bereits ausgeführt, kann die Struktur der gebildeten Oligomere kompliziert sein. Die Anzahl der funktionellen Gruppen im Oligomer kann nach Kondensationsgrad, Art der Kondensation und eingesetzten monomeren Silanvernetzer varieren, ist aber zumindest 2, in der Regel aber größer, z.B. 4 oder mehr.

Der Kondensationsgrad des oligomeren Siloxans, d.h. die Zahl der miteinander kondensierten monomeren Silanvernetzer, kann in breiten Bereichen je nach Anwendungszweck variieren, kann aber z.B. im Bereich von 2 bis 200 und bevorzugt von 4 bis 50 liegen. Es ist verständlich, dass der Kondensationsgrad, insbesondere bei höheren Kondensationsgraden, häufig lediglich einen Mittelwert darstellt.

Die Menge des oligomere Siloxans als Vernetzer kann in breiten Bereichen variieren. Beispielsweise kann das oligomere Siloxan in einer 1-komponentigen Silikonformulierung in einer Menge von 0,1 und 25 Gew.-%, bevorzugt 0,3 bis 20 Gew.-%, besonders bevorzugt von 1 und 15 Gew.-%, jeweils bezogen auf die Gesamtmasse, vorliegen. In 2-komponentigen Silikonformulierungen werden oligomere Siloxane als Vernetzer üblicherweise im wesentlichen nur in der Härterkomponente verwendet und können dort im Mengen von 0,5 und 75 Gew.-%, bevorzugt von 1 bis 50 Gew.-%, besonders bevorzugt von 3 bis 30 Gew.-%, jeweils bezogen auf die Gesamtmasse der Härterkomponente, vorliegen.

Wenn die Silikonformulierung eine zweikomponentige Silikonformulierung mit einer Polymerkomponente A, die das mindestens eine Polydiorganosiloxan umfasst, und einer Härterkomponente B, die das mindestens eine oligomere Siloxan und das mindestens eine funktionalisierte Oligodimethylsiloxan umfasst, verwendet wird, ist das Gewichtsverhältnis von Polymerkomponente A zu Härterkomponente B z.B. ≥ 1:1, bevorzugt von 3:1 bis 15:1 und bevorzugter 10:1 bis 13:1.

Diese oligomeren Siloxane sind mit herkömmlichen Polydiorganosiloxanen, insbesondere Polydimethylsiloxanen, nicht oder nur schlecht mischbar. Dies führt zu Problemen der Lagerstabilität von formulierten Silikonprodukten.

Erfindungsgemäß können diese Probleme vermieden werden, wenn Moleküle zugesetzt werden, deren chemische Struktur zwischen denen der genannten oligomeren Siloxane und denen der Polydiorganosiloxane, insbesondere der Polydimethylsiloxane, liegt. Dies ist überraschenderweise der Fall bei funktionalisierten Oligodimethylsiloxanen, deren Struktur im wesentlichen ketten- oder sternförmig, also eher 2-dimensional ist. Diese können in der Siloxankette und/oder an den Kettenenden funktionalisiert sein.

Die ein- oder zweikomponentige Silikonformulierung umfasst daher weiter ein funktionalisiertes Oligodimethylsiloxan. Es handelt sich bevorzugt um ein lineares funktionalisiertes Oligodimethylsiloxan. Das funktionalisierte Oligodimethylsiloxan weist mindestens eine endständige oder seitenständige Funktionalisierungsgruppe auf. In der Regel weist das funktionalisierte Oligodimethylsiloxan nicht mehr als 20, bevorzugt nicht mehr als 10 endständige oder seitenständige Funktionalisierungsgruppen auf.

Die Funktionalisierungsgruppe umfasst als Funktionalisierung einen oder mehrere Reste, z.B. einen oder mehrere polare Reste, der oder die gegebenenfalls über eine Verbrückungsgruppe an ein Si-Atom des funktionalisierten Oligodimethylsiloxans gebunden sind.

Die Funktionalisierungsgruppe ist in der Regel eine nicht hydrolysierbare Gruppe. Über die Funktionalisierungsgruppe ist im allgemeinen im Gegensatz zu den vorstehend genannten funktionellen Gruppen, keine Vernetzung mit den funktionellen Gruppen des Polydiorganosiloxans möglich, zumindest unter den Bedingungen unter denen die Silikonformulierung gehärtet wird.

Das funktionalisierte Oligodimethylsiloxan weist eine der beiden folgenden allgemeinen Formeln auf, wobei der Substituent Me Methylgruppen darstellt.

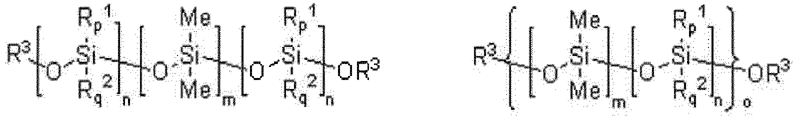

In den obigen beiden allgemeinen Formeln ist R¹ unabhängig voneinander eine Funktionalisierungsgruppe wie vorstehend beschrieben, bevorzugt eine Gruppe der Formel (1) R^{F}-Alkyl-, der Formel (2) R^{F}-Alkyl-Si(R^{S})₂-O-, der Formel (3) Aminoalkylaminoalkyl oder der Formel (4) Aminoalkylaminoalkylaminoalkyl, worin in den Formeln (1) bis (4) R^{F} ausgewählt ist aus Mercapto, Glycidoxy, Amino (z.B. NH₂, NHR oder NR₂ wobei R unabhängig voneinander C₁-C₄-Alkyl, Aryl wie Phenyl, C₄-C₇-Cycloalkyl ist), Amido, Methacrylato, Carbamato, Isocyanato oder Polyalkylenglykol, insbesondere Polyethylen- oder Polypropylenglykol und Copolymere davon, Alkyl bevorzugt unabhängig voneinander C₁-C₄-Alkyl, insbesondere Methyl, Ethyl und Propyl ist, R^{S} unabhängig voneinander C₁-C₄-Alkyl, insbesondere Methyl, oder C₁-C₄-Alkoxy, insbesondere Methoxy und Ethoxy, ist.

R² ist unabhängig voneinander Alkyl, bevorzugt Methyl, Hydroxy, Alkoxy, wie Methoxy oder Ethoxy, Alkyldimethylsilyloxy, Alkylmethylalkoxysilyloxy oder Alkyldialkoxysilyloxy. R³ kann H oder Alkyl sein. In den vorstehenden Beispielen für R² und R³ können Alkyl oder Alkoxy z.B. C₁-C₄-Alkyl bzw. C₁-C₄-Alkoxy sein.

Ferner gilt: m = 5-5000, bevorzugt 10-1000, bevorzugter 20-800, insbesondere 10-500 bzw. 20-500; n = 1-15, o = 1-50, p = 1 oder 2, q = 0 oder 1 mit p + q = 2.

Bevorzugte Beispiele für R¹ sind 3-Aminopropyl, 2-Aminoethyl-3-aminopropyl, 2-Aminoethyl-2-aminoethyl-3-aminopropyl, EO-Alkyl (Polyethylenglykolalkyl, z.B. EO-Propyl (Polyethylenglykolpropyl, z.B. mit einer mittleren Anzahl von 8 Ethylenoxidgruppen), EO-PO-Alkyl, ω-Amidoalkyl, 3-Mercaptopropyl, 3-Glycidyloxypropyl, N-Cyclohexylaminomethyl, 3-Methacrylatopropyl, Methacrylatomethyl, 3-Isocyanatopropyl, O-Methyl-carbamatomethyl, O-Methyl-carbamatomethyl, EO-Alkyldimethylsilyloxy, EO-Alkylmethylalkoxysilyloxy, EO-Alkyldialkoxysilyloxy, EO-PO-Alkyldimethylsilyloxy, EO-PO-Alkylmethylalkoxysilyloxy, EO-PO-Alkyldialkoxysilyloxy, Amino-alkyldimethylsilyloxy, Aminoalkylmethylalkoxysilyloxy, Amino-alkyldialkoxysilyloxy, Alkyldimethylsilyloxy, EO-Alkylmethylalkoxysilyloxy und EO-Alkyldialkoxysilyloxy. In den vorstehenden Beispielen können Alkyl oder Alkoxy z.B. C₁-C₄-Alkyl bzw. C₁-C₄-Alkoxy sein.

Das funktionalisierte Oligodimethylsiloxan kann in einer Menge von 0,01 bis 10 Gew.-%, bevorzugt von 0,1 bis 8 Gew.-%, besonders bevorzugt von 0,5 bis 5 Gew.-%, jeweils bezogen auf die Gesamtmasse der Silikonformulierung, vorhanden sein. Das funktionalisierte Oligodimethylsiloxan liegt insbesondere in derselben Komponente wie das oligomere Siloxan vor.

In einer bevorzugten Ausführungsform weist das funktionalisierte Oligodimethylsiloxan einen HLB-Wert von kleiner oder gleich 15, bevorzugt kleiner oder gleich 12 und bevorzugter kleiner oder gleich 9 auf. Der HLB-Wert ("hydrophilic-lipophilic balance") ist ein dem Fachmann geläufiger Wert und kann nach einer Methode berechnet werden, die in Griffin, W.C., Calculation of HLB values of non-ionic surfactants, J. Soc. Cosm. Chem. 5 (1954), S. 259 beschrieben ist.

Die ein- oder zweikomponentige Silikonformulierung kann gegebenenfalls noch weitere Bestandteile enthalten, wie sie für ein- oder zweikomponentige Silikonformulierungen üblich sind. Derartige zusätzliche Bestandteile sind z.B. Katalysatoren, Weichmacher, anorganische und/oder organische Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufmittel, Thixotropierungsmittel und weitere dem Fachmann bekannte gängige Rohstoffe und Additive. Die ein- oder zweikomponentige Silikonformulierung kann auch zusätzlich zu den oligomeren Siloxanen monomere Silanvernetzer wie vorstehend beschrieben enthalten.

Hierbei handelt es sich um völlig übliche Zusatzmittel, die z.B. im Handel erhältlich sind. Die Zugabe solcher Zusatzmittel ist gängige Praxis für solche Silikonformulierungen. Der Fachmann ist in Abhängigkeit von der Ausgangsformulierung und dem Einsatzzweck mit der Auswahl geeigneter Zusatzmittel und der einzusetzenden Menge für die jeweilige Komponente vertraut.

Bei zweikomponentigen System können die Zusatzstoffe in einer oder in beiden Komponenten zugefügt werden. Insbesondere eignen sich alle Zusatzstoffe prinzipiell sowohl für die Polymerkomponente als auch für die Silikonkomponente umfassend das mindestens eine oligomere Siloxan und das mindestens eine funktionalisierte Oligodimethylsiloxan, die als Härterkomponente eingesetzt werden kann.

Der Silikonformulierung, insbesondere die einkomponentige Silikonformulierung, enthält z.B. bevorzugt einen Katalysator für die Vernetzung des Polyorganosiloxans. Geeignete Katalysatoren sind im Handel erhältlich. Gebräuchliche Katalysatoren sind z.B. zinnorganische Verbindungen oder Titanate.

Ein Beispiel für gegebenenfalls einzusetzende Weichmacher sind trialkylsilylterminierte Polydimethylsiloxane, wobei die trialkylsilylterminierten Polydimethylsiloxane bevorzugt eine Viskosität bei 23°C im Bereich von 1 bis 10'000 mPa.s aufweisen. Es können auch z.B. trimethylsilylterminierte Polydimethylsiloxane eingesetzt werden, bei denen einige der Methylgruppen durch andere organische Gruppen wie zum Beispiel Phenyl-, Vinyl- oder Trifluorpropylgruppen ersetzt sind. Das Polydimethylsiloxan kann auch monofunktionell sein, d.h. ein Ende ist reaktiv, z.B. über eine Hydroxy-Endgruppe. Bestimmte Kohlenwasserstoffe können ebenfalls als Weichmacher eingesetzt werden.

Vorzugsweise weist die Silikonformulierung gegebenenfalls einen oder mehrere Füllstoffe auf, mit denen z.B. sowohl rheologische Eigenschaften der nicht ausgehärteten Formulierung als auch die mechanischen Eigenschaften und die Oberflächenbeschaffenheit der ausgehärteten Formulierung beeinflusst werden können. Es kann von Vorteil sein, eine Mischung verschiedener Füllstoffe einzusetzen.

Beispiele für geeignete Füllstoffe sind anorganische oder organische Füllstoffe, wie natürliche, gemahlene oder gefällte Calciumcarbonate, welche gegebenenfalls mit Fettsäuren, insbesondere Stearinsäure, beschichtet sind, calcinierte Kaoline, Aluminiumoxide, Aluminiumhydroxide, Kieselsäuren, insbesondere hochdisperse Kieselsäuren aus Pyrolyseprozessen, Russ, insbesondere industriell hergestellter Russ, Aluminiumsilicate, Magnesium-Aluminiumsilicate, Zirkoniumsilicate, Quarzmehl, Cristobalitmehl, Diatomeenerde, Glimmer, Eisenoxide, Titanoxide, Zirconiumoxide, Gips, Annalin, Bariumsulfat, Borcarbid, Bornitrid, Graphit, Kohlefasern, Zeolithe, Glasfasern oder Glashohlkugeln, deren Oberfläche gegebenenfalls mit einem Hydrophobierungsmittel behandelt ist. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumtrihydroxid.

Die erfindungsgemäßen ein- oder zweikomponentigen Silikonformulierungen, bevorzugt in Form eines RTV-Silikons, eignen sich insbesondere als elastische Kleb- oder Dichtstoffe. Ein geeignetes Anwendungsgebiet ist z.B. das Kleben oder Dichten von Gegenständen aus Glas, Metall, z.B. Aluminium, Kupfer, oder Edelstahl, oder Kunststoff, z.B. PVC, Polyamid, Polycarbonat oder PET. Die erfindungsgemäßen Silikonformulierungen werden besonders bevorzugt als Kleb- oder Dichtstoffe für die Bereiche Automobil oder Solar, Fassadenbau, Isolierglas oder Fensterglas und ganz allgemein für den Bau verwendet.

### Beispiele

Im folgenden werden konkrete Ausführungsformen der Erfindung ausgeführt, die den Umfang der Erfindung aber nicht beschränken sollen. Sofern nicht anders angegeben, beziehen sich Angaben auf das Gewicht.

In den Beispielen wurden u.a. folgende Handelsprodukte eingesetzt:
- Hansa®ADD 8080: Bezema AG, diaminofunktionelles Oligosiloxan
- Tegomer®A-Si2322: Evonik Goldschmidt GmbH, Aminoalkyloligodimethylsiloxan
- Geniosil®GF94: Wacker Chemie AG, 2-Aminoethyl-3-aminopropyltriethoxysilan
- Dynasylan®1146: Evonik Industries, ein Co-Oligomer eines alkylfunktionellen und eines diaminofunktionellen Silans
- Dynasylan 6490: Evonik Industries, oligomeres Vinylsilan

Die in den nachstehenden Tabellen angegebenen Mengen wurden eingewogen und an einem Speedmixer der Firma Hauschild bei 23°C und 50% r.F. für 40 s bei 2000 U/min gemischt.

Die erhaltenen Mischungen 1-13 wurden luftdicht verschlossen in durchsichtigen Polypropylengefäßen bei 23°C gelagert. Für die Beispiele 14-21 wurde die Härterkomponente B in Kartuschen abgefüllt, luftdicht verschlossen, bei 23°C stehend gelagert und ohne erneutes Mischen weiterverarbeitet.

Phasentrennungen bei den Beispielen 1-13 wurden visuell beobachtet. Die Lagerung wurde nach 6 Monaten abgebrochen, wenn bis dahin keine Phasentrennung beobachtet werden konnte.

Zur Bestimmung der Topfzeit wurden die Beispielkomponenten 14-21 im Gewichtsverhältnis 1:13 mit einer Polymerkomponente innig vermischt. Die Vermischung erfolgte an einem Speedmixer von Hauschild, es wurde bei 23°C und 50% r.F. für 20 s mit 2200 U/min gemischt. Ein Holzspatel wurde in die Mischung eingetaucht und in regelmäßigen Abständen ohne vorheriges rühren herausgezogen. Die Topfzeit ist die Zeit, ab der der Spatel nicht mehr widerstandslos herausgezogen werden kann. Die zur Untersuchung verwendete Polymerkomponente hatte die folgende Zusammensetzung:
45 Gew.-% α,ω-OH-terminiertes Polydimethylsiloxan mit einer Viskosität von 6000 mPas, 15 Gew.-% trimethylsilylterminiertes Polydimethylsiloxan mit einer Viskosität von 100 mPas, 20 Gew.-% Aluminiumtrihydroxid (Apyral®4 der Firma Nabaltec), 20 Gew.-% natürliche, Stearin-beschichtete Kreide (OMYA®BLR/3 der Firma OMYA).

Zur Bestimmung der Haftung wurden die Beispielkomponenten 14-21 im Gewichtsverhältnis 1:13 mit der oben genannten Polymerkomponenten innig vermischt. Die Vermischung erfolgte an einem Speedmixer von Hauschild, es wurde bei 23°C und 50% r.F. für 20 s mit 2200 U/min gemischt. Die Mischung wurde mit ca. 2 mm Schichtdicke vollflächig direkt auf Floatglasscheiben der Abmessung 75 x 150 x 5 mm aufgebracht. Die Floatglasscheiben wurden zuvor mit Isopropanol entfettet. Die beschichteten Glasscheiben wurden 7d bei 23°C und 50% r.F. ausgehärtet und anschließend in 55°C warmes Wasser eingelegt. Die Haftung wurde mittels nachfolgendem Schältest bestimmt.

Beim Schältest wird am Ende des beschichteten Floatglases knapp über der Klebefläche eingeschnitten. Das eingeschnittene Ende des Silikonklebstoffes wird mit 2 Fingern festgehalten und in einem Winkel von >90° vom Untergrund gezogen. Dies geschieht durch vorsichtiges Ziehen des Klebstoffes sowie durch Platzieren eines Schnittes bis auf den blanken Untergrund senkrecht zur Ziehrichtung. Die Abziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen des Silikons auf dem Untergrund zurückbleibende Klebestoff (Kohäsionsbruch). Die Bewertung der Hafteigenschaften erfolgt durch Abschätzen des kohäsiven Anteils der Haftfläche:
Die Prozentangaben beziehen sich auf den Anteil des Köhäsionsbruchs. Ein Ergebnis von 100% bedeutet, dass die Silikonbeschichtung im Schälversuch zu 100% kohäsiv bricht. 0% Kohäsionsbruch bedeutet einen rein adhäsiven Bruch.

| Bsp. | Vinylmethylmethoxysilyl-terminiertes Poly(dimethylsiloxan), 50'000 mPas | Funktionelles Oligomer | Funktionalisiertes Oligodimethylsiloxan | Zeit bis Entmischung |
|---|---|---|---|---|
| 1 Vgl. | 100 g | 5g Dynasylan 1146 | 0 g | 31 d |
| 2 Vgl. | 100 g | 10g Dynasylan 1146 | 0 g | 22 d |
| 3 Vgl. | 100 g | 20 g Dynasylan 1146 | 0 g | 7 d |
| 4 Vgl. | 100 g | 10g Dynasylan 6490 | 0 g | 15 d |
| 5 | 100 g | 10g Dynasylan 1146 | 0,5 g Hansa ADD 8080 | 100 d |
| 6 | 100 g | 10g Dynasylan 1146 | 1 g Hansa ADD 8080 | Keine Entmischung in 6 Monaten |
| 7 | 100 g | 10g Dynasylan 1146 | 2g Hansa ADD 8080 | Keine Entmischung in 6 Monaten |
| 8 | 100 g | 10g Dynasylan 1146 | 1 g Hansa ADD 8038 | 120 d |
| 9 | 100 g | 10g Dynasylan 1146 | 1 g Tegomer A-Si 2322 | 95 d |
| 10 | 100 g | 10g Dynasylan 1146 | 2g Tegomer A-Si 2322 | Keine Entmischung in 6 Monaten |
| 11 | 100 g | 10g Dynasylan 6490 | 1 g Hansa ADD 8080 | Keine Entmischung in 6 Monaten |
| 12 | 100 g | 10g Dynasylan 6490 | 1 g Tegomer A-Si 2322 | 150 d |
| 13 | 100 g | 10g Dynasylan 6490 | 2g Tegomer A-Si 2322 | Keine Entmischung in 6 Monaten |

| Beispiel | 14 Vgl. | 15 Vgl. | 16 | 17 | 18 | 19 | 20 | 21 |
|---|---|---|---|---|---|---|---|---|
| Vinylmethylmethoxysilylterminiertes Poly(dimethylsiloxan), 50'000 mPas | 60g | 60g | 59,5g | 58,5g | 53,5g | 59,5g | 59,5g | 58,5g |
| 1,2-Bis(tri-ethoxysilyl)ethan | 18g | 18g | 18g | 18g | 18g | 18g | 18g | 18g |
| Vinyltrimethoxysilan | 12g | 12g | 12g | 12g | 12g | 12g | 12g | 12g |
| Tetraethylorthosilicat | 4,5g | 4,5g | 4,5g | 4,5g | 4,5g | 4,5g | 4,5g | 4,5g |
| Funktionelles Oligosiloxan | 5g | 5g | 5g | 5g | 10g | 5g | 5g | 5g |
| | Geniosil GF94 | D* | D* | D* | D* | D* | D* | D* |
| Funktionalisiertes Oligomer | | | 0,5g AD* | 1,5g AD* | 1,5g AD* | 0,5 g AD* | 0,5g AS* | 1,5 g AS* |
| Dibutylzinndiacetat | 0,5g | 0,5g | 0,5g | 0,5g | 0,5g | 0,5g | 0,5g | 0,5g |
| | | | | | | | | |
| Haftung auf Glas (14d 55°C Wasserbad) | 100% | 75% | 50% | 100% | 100% | 100% | 50% | 100% |
| Haftung auf Glas nach 4 Wochen Lagerung der Komponenten (14d 55°C Wasserbad) | 100% | 0% | 50% | 100% | 100% | 100% | 50% | 100% |
| Topfzeit [min] | 6 | 11 | 21 | 19 | 16 | 29 | 64 | 42 |
| Topfzeit nach 4 Wochen Lagerung der Komponenten [min] | 8 | 39 | 22 | 20 | 17 | 28 | 61 | 43 |

| | | | | | | | | |
|---|---|---|---|---|---|---|---|---|
| D* : Dynasylan 1146, AD*: Hansa ADD 8080, AS*: Tegomer A-Si2322 | | | | | | | | |

Aus diesen Tabellen wird ersichtlich, dass funktionelle oligomere Siloxane nach Mischung mit Silikonölen Phasentrennung zeigen und die Eigenschaften einer entsprechenden Silikonformulierung nach Lagerung schlechter werden. Der erfindungsgemäße Zusatz von funktionalisierten Oligodimethylsiloxanen verzögert oder verhindert die Phasenseparation, die Eigenschaften einer entsprechenden Silikonformulierung bleiben unverändert.

## Patentansprüche

1. Ein- oder zweikomponentige Silikonformulierung, umfassend
a) mindestens ein vernetzbares Polydiorganosiloxan, wobei das Polydiorganosiloxan ein Polydimethylsiloxan ist,
b) mindestens ein oligomeres Siloxan als Vernetzer für das Polydiorganosiloxan, wobei das oligomere Siloxan ein Kondensationsprodukt von monomeren Silanvernetzern ist, und
c) mindestens ein funktionalisiertes Oligodimethylsiloxan, wobei das funktionalisierte Oligodimethylsiloxan eine der beiden folgenden allgemeinen Formeln aufweist, 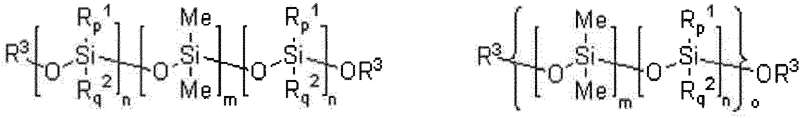 wobei der Substituent Me Methylgruppen darstellt,
R¹ unabhängig voneinander eine Funktionalisierungsgruppe ausgewählt aus einer Gruppe der Formel (1) R^{F}-Alkyl-, der Formel (2) R^{F}-Alkyl-Si(R^{S})₂-O-, der Formel (3) Aminoalkylaminoalkyl oder der Formel (4) Aminoalkylaminoalkylaminoalkyl ist, worin in den Formeln (1) bis (4) R^{F} ausgewählt ist aus Mercapto, Glycidoxy, Amino, Amido, Methacrylato, Carbamato, Isocyanato und Polyalkylenglykol; und R^{S} unabhängig voneinander C₁-C₄-Alkyl oder C₁-C₄-Alkoxy ist,
R² unabhängig voneinander Alkyl, Hydroxy, Alkoxy, Alkyldimethylsilyloxy, Alkylmethylalkoxysilyloxy oder Alkyldialkoxysilyloxy ist,
R³ H oder Alkyl ist, und
m = 5-5000; n = 1-15, o = 1-50, p = 1 oder 2, q = 0 oder 1 mit p + q = 2.

2. Ein- oder zweikomponentige Silikonformulierung nach Anspruch 1, wobei das funktionalisierte Oligodimethylsiloxan eine der beiden allgemeinen Formeln aufweist, worin m = 10-1000.

3. Ein- oder zweikomponentige Silikonformulierung nach irgendeinem der Ansprüche 1 bis 2, wobei der Kondensationsgrad des funktionalisierten Oligodimethylsiloxans im Bereich von 5 bis 5000 liegt.

4. Ein- oder zweikomponentige Silikonformulierung nach Anspruch 3, wobei der Kondensationsgrad des funktionalisierten Oligodimethylsiloxans im Bereich von 10 bis 500 liegt.

5. Ein- oder zweikomponentige Silikonformulierung nach irgendeinem der Ansprüche 1 bis 4, wobei die Silikonformulierung eine zweikomponentige Silikonformulierung ist, wobei die ersten Komponente als Polymerkomponente A das mindestens eine Polydiorganosiloxan umfasst und die zweite Komponente als Härterkomponente B das mindestens eine oligomere Siloxan und das mindestens eine funktionalisierte Oligodimethylsiloxan umfasst.

6. Ein- oder zweikomponentige Silikonformulierung nach irgendeinem der Ansprüche 1 bis 5, wobei das Polydiorganosiloxan bei einer Temperatur von 23°C eine Viskosität im Bereich von 1000 bis 350000 mPas aufweist, gemessen in Anlehnung an DIN 53018 mittels Kegel-Platte-Viskosimeter MCR101 der Firma Anton-Paar, Österreich, mit Kegel-Typ CP 25-1 bei 23°C und einer Scherrate von 0,5 s⁻¹.

7. Ein- oder zweikomponentige Silikonformulierung nach irgendeinem der Ansprüche 1 bis 6, wobei das Polydiorganosiloxan ein hydroxyterminertes Polydimethylsiloxan ist.

8. Ein- oder zweikomponentige Silikonformulierung nach irgendeinem der Ansprüche 1 bis 7, wobei das oligomere Siloxan ein Kondensationsprodukt von einem oder mehreren monomeren Silanvernetzern ist und der monomere Silanvernetzer eine Silanverbindung mit zwei oder mehr, bevorzugt drei oder mehr, funktionellen Gruppen ist, die aus mindestens einer von Alkoxygruppen, Acetoxygruppen, Oximgruppen, Aminogruppen, und N-Methylamidogruppen ausgewählt sind.

9. Ein- oder zweikomponentige Silikonformulierung nach irgendeinem der Ansprüche 1 bis 8, wobei das oligomere Siloxan bei einer einkomponentigen Silikonformulierung in einer Menge von 0,1 bis 25 Gew.-%, bezogen auf die Gesamtmasse der Silikonformulierung, und bei einer zweikomponentigen Silikonformulierung in der Härterkomponente B in einer Menge von 0,5 bis 75 Gew.-%, bezogen auf die Gesamtmasse der Härterkomponente, enthalten ist.

10. Ein- oder zweikomponentige Silikonformulierung nach irgendeinem der Ansprüche 1 bis 9, wobei das funktionalisierte Oligodimethylsiloxan in einer Menge von 0,01 bis 10 Gew.-%, bezogen auf die Gesamtmasse der Silikonformulierung enthalten ist.

11. Ein- oder zweikomponentige Silikonformulierung nach irgendeinem der Ansprüche 1 bis 10, wobei die Silikonformulierung ein Klebstoff oder ein Dichtstoff ist.

12. Silikonkomponente, umfassend
a) mindestens ein oligomeres Siloxan, wobei das oligomere Siloxan ein Kondensationsprodukt von monomeren Silanvernetzern ist, und
b) mindestens ein funktionalisiertes Oligodimethylsiloxan, wobei das funktionalisierte Oligodimethylsiloxan eine der beiden folgenden allgemeinen Formeln aufweist, 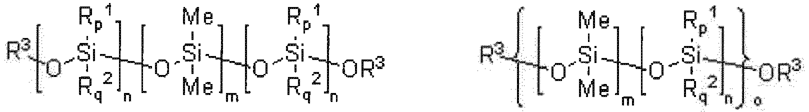 wobei der Substituent Me Methylgruppen darstellt,
R¹ unabhängig voneinander eine Funktionalisierungsgruppe ausgewählt aus einer Gruppe der Formel (1) R^{F}-Alkyl-, der Formel (2) R^{F}-Alkyl-Si(R^{S})₂-O-, der Formel (3) Aminoalkylaminoalkyl oder der Formel (4) Aminoalkylaminoalkylaminoalkyl ist, worin in den Formeln (1) bis (4) R^{F} ausgewählt ist aus Mercapto, Glycidoxy, Amino, Amido, Methacrylato, Carbamato, Isocyanato und Polyalkylenglykol; und R^{S} unabhängig voneinander C₁-C₄-Alkyl oder C₁-C₄-Alkoxy ist,
R² unabhängig voneinander Alkyl, Hydroxy, Alkoxy, Alkyldimethylsilyloxy, Alkylmethylalkoxysilyloxy oder Alkyldialkoxysilyloxy ist,
R³ H oder Alkyl ist, und
m = 5-5000; n = 1-15, o = 1-50, p = 1 oder 2, q = 0 oder 1 mit p + q = 2.

13. Verwendung eines funktionalisierten Oligodimethylsiloxans als Phasenvermittler für eine Mischung umfassend ein vernetzbares Polydiorganosiloxan und ein oligomeres Siloxan als Vernetzer für das Polydiorganosiloxan, wobei das oligomere Siloxan ein Kondensationsprodukt von monomeren Silanvernetzern ist, wobei das funktionalisierte Oligodimethylsiloxan eine der beiden folgenden allgemeinen Formeln aufweist, 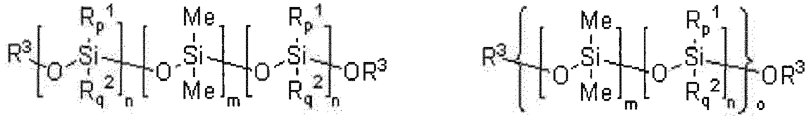 wobei der Substituent Me Methylgruppen darstellt,
R¹ unabhängig voneinander eine Funktionalisierungsgruppe ausgewählt aus einer Gruppe der Formel (1) R^{F}-Alkyl-, der Formel (2) R^{F}-Alkyl-Si(R^{S})₂-O-, der Formel (3) Aminoalkylaminoalkyl oder der Formel (4) Aminoalkylaminoalkylaminoalkyl ist, worin in den Formeln (1) bis (4) R^{F} ausgewählt ist aus Mercapto, Glycidoxy, Amino, Amido, Methacrylato, Carbamato, Isocyanato und Polyalkylenglykol; und R^{S} unabhängig voneinander C₁-C₄-Alkyl oder C₁-C₄-Alkoxy ist,
R² unabhängig voneinander Alkyl, Hydroxy, Alkoxy, Alkyldimethylsilyloxy, Alkylmethylalkoxysilyloxy oder Alkyldialkoxysilyloxy ist,
R³ H oder Alkyl ist, und
m = 5-5000; n = 1-15, o = 1-50, p = 1 oder 2, q = 0 oder 1 mit p + q = 2.

14. Verwendung einer ein- oder zweikomponentigen Silikonformulierung nach einem der Ansprüche 1 bis 11 als Klebstoff oder Dichtstoff.

## Claims

1. A one- or two-component silicone formulation comprising
a) at least one cross-linkable polydiorganosiloxane, wherein the polydiorganosiloxane is a polydimethylsiloxane,
b) at least one oligomeric siloxane as cross-linker for the polydiorganosiloxane, wherein the oligomeric siloxane is a condensation product of monomeric silane cross-linkers, and
c) at least one functionalized oligodimethylsiloxane
wherein the functionalized oligodimethylsiloxane has one of the two following general formulas, 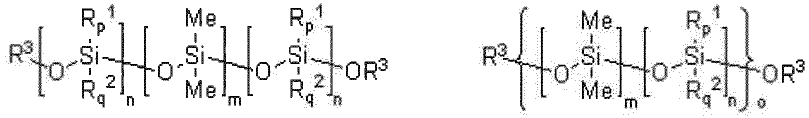 wherein the substituent Me represents methyl residues,
R¹ is independently of each other a functionalizing residue selected from a residue with the formula (1) R^{F}-alkyl-, the formula (2) R^{F}-alkyl-Si(R^{S})₂-O-, the formula (3) aminoalkylaminoalkyl or the formula (4) aminoalkylaminoalkylaminoalkyl, wherein in the formulas (1) to (4) R^{F} is selected from mercapto, glycidoxy, amino, amido, methacrylato, carbamato, isocyanato and polyalkylene glycol; and R^{S} is independently of each other C₁-C₄-alkyl or C₁-C₄-alkoxy,
R² is independently of each other alkyl, hydroxy, alkoxy, alkyldimethylsilyloxy, alkylmethylalkoxysilyloxy or alkyldialkoxysilyloxy,
R³ is H or alkyl, and
m = 5-5000; n = 1-15, o = 1-50, p = 1 or 2, q = 0 or 1 with p + q = 2.

2. The one- or two-component silicone formulation according to Claim 1, wherein the functionalized oligodimethylsiloxane has one of the two general formulas, in which m= 10-1000.

3. The one- or two-component silicone formulation according to any one of Claims 1 to 2, wherein the degree of condensation of the functionalized oligodimethylsiloxane is in the range of 5 to 5000.

4. The one- or two-component silicone formulation according to Claim 3, wherein the degree of condensation of the functionalized digodimethylsiloxane is in the range of 10 to 500.

5. The one- or two-component silicone formulation according to any one of Claims 1 to 4, wherein the silicone formulation is a two-component silicone formulation, wherein the first component as polymer component A comprises the at least one polydiorganosiloxane and the second component as hardener component B comprises the at least one oligomeric siloxane and the at least one functionalized oligodimethylsiloxane.

6. The one- or two-component silicone formulation according to any one of Claims 1 to 5, wherein the polydiorganosiloxane has a viscosity in the range of 1000 to 350000 mPas at a temperature of 23°C, measured in accordance with DIN 53018 with a cone-plate viscometer MCR 101 from the company Anton-Paar, Austria, with cone type CP 25-1 at 23°C and a shear rate of 0.5 s⁻¹.

7. The one- or two-component silicone formulation according to any one of Claims 1 to 6, wherein the polydiorganosiloxane is a hydroxy-terminated polydimethylsiloxane.

8. The one- or two-component silicone formulation according to any one of Claims 1 to 7, wherein the oligomeric siloxane is a condensation product of one or more monomeric silane cross-linkers and the monomeric silane cross-linker is a silane compound with two or more, preferably three or more functional residues selected from at least one of alkoxy residues, acetoxy residues, oxime residues, amino residues, and N-methylamido residues.

9. The one- or two-component silicone formulation according to any one of Claims 1 to 8, wherein the oligomeric siloxane is contained in a one-component silicone formulation in an amount of 0.1 to 25 wt%, relative to the total weight of the silicone formulation, and in a two-component silicone formulation in the hardener component B in an amount of 0.5 to 75 wt%, relative to the total weight of the hardener component.

10. The one- or two-component silicone formulation according to any one of Claims 1 to 9, wherein the functionalized oligodimethylsiloxane is contained in an amount of 0.01 to 10 wt%, relative to the total mass of the silicone formulation.

11. The one- or two-component silicone formulation according to any one of Claims 1 to 10, wherein the silicone formulation is an adhesive or a sealant.

12. A silicone component, comprising
a) at least one oligomeric siloxane wherein the oligomeric siloxane is a condensation product of monomeric silane cross-linkers, and
b) at least one functionalized oligodimethylsiloxane, wherein the functionalized oligodimethylsiloxane has one of the two following general formulas, 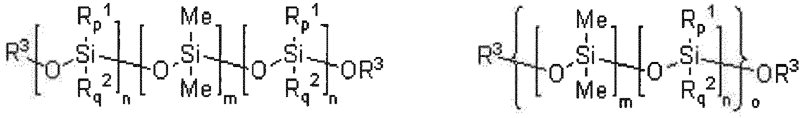
wherein the substituent Me represents methyl residues,
R¹ is independently of each other a functionalizing residue selected from a residue with the formula (1) R^{F}-alkyl-, the formula (2) R^{F}-alkyl-Si(R^{S})₂-O-, the formula (3) aminoalkylaminoalkyl or the formula (4) aminoalkylaminoalkylaminoalkyl, wherein in the formulas (1) to (4) R^{F} is selected from mercapto, glycidoxy, amino, amido, methacrylato, carbamato, isocyanato and polyalkylene glycol; and R^{S} is independently of each other C₁-C₄-alkyl or C₁-C₄-alkoxy,
R² is independently of each other alkyl, hydroxy, alkoxy, alkyldimethylsilyloxy, alkylmethylalkoxysilyloxy or alkyldialkoxysilyloxy,
R³ is H or alkyl, and
m = 5-5000; n = 1-15, o = 1-50, p = 1 or 2, q = 0 or 1 with p + q = 2.

13. The use of a functionalized oligodimethylsiloxane as phase compatibilizer for a mixture comprising a cross-linkable polydiorganosiloxane and an oligomeric siloxane as cross-linker for the polydiorganosiloxane, wherein the oligomeric siloxane is a condensation product of monomeric silane cross-linkers, wherein the functionalized oligodimethylsiloxane has one of the two following general formulas, 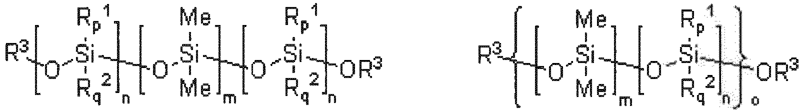 wherein the substituent Me represents methyl residues,
R¹ is independently of each other a functionalizing residue selected from a residue with the formula (1) R^{F}-alkyl-, the formula (2) R^{F}-alkyl-Si(R^{S})₂-O-, the formula (3) aminoalkylaminoalkyl or the formula (4) aminoalkylaminoalkylaminoalkyl, wherein in the formulas (1) to (4) R^{F} is selected from mercapto, glycidoxy, amino, amido, methacrylato, carbamato, isocyanato and polyalkylene glycol; and R^{S} is independently of each other C₁-C₄-alkyl or C₁-C₄-alkoxy,
R² is independently of each other alkyl, hydroxy, alkoxy, alkyldimethylsilyloxy, alkylmethylalkoxysilyloxy or alkyldialkoxysilyloxy,
R³ is H or alkyl, and
m = 5-5000; n = 1-15, o = 1-50, p = 1 or 2, q = 0 or 1 with p + q = 2.

14. The use of a one- or two-component silicone formulation according to any one of Claims 1 to 11, as adhesive or sealant.

## Revendications

1. Formulation de silicone mono- ou bicomposante, comprenant :
a) au moins un polydiorganosiloxane réticulable, le polydiorganosiloxane étant un polydiméthylsiloxane,
b) au moins un siloxane oligomère en tant qu'agent de réticulation pour le polydiorganosiloxane, le siloxane oligomère étant un produit de condensation d'agents de réticulation silane monomères, et
c) au moins un oligodiméthylsiloxane fonctionnalisé, l'oligodiméthylsiloxane fonctionnalisé présentant une des deux formules générales suivantes : 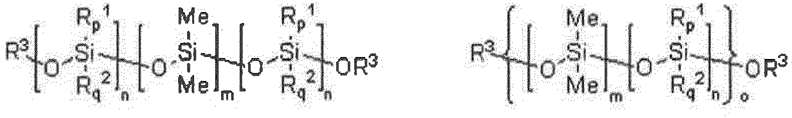 dans lesquelles le substituant Me représente des groupes méthyle,
les R¹ représentent indépendamment les uns des autres un groupe de fonctionnalisation choisi parmi un groupe de formule (1) R^{F}-alkyle, de formule (2) R^{F}-alkyle-Si(R^{S})₂-O-, de formule (3) aminoalkylaminoalkyle ou de formule (4) aminoalkylaminoalkylaminoalkyle, dans les formules (1) à (4), R^{F} étant choisi parmi mercapto, glycidoxy, amino, amido, méthacrylato, carbamato, isocyanato et polyalkylène glycol ; et les R^{S} étant indépendamment les uns des autres un alkyle en C₁-C₄ ou un alcoxy en C₁-C₄, les R² représentent indépendamment les uns des autres alkyle, hydroxy, alcoxy, alkyldiméthylsilyloxy, alkylméthylalcoxysilyloxy ou alkyldialcoxysilyloxy,
R³ représente H ou alkyle, et
m = 5 à 5 000 ; n = 1 à 15, o = 1 à 50, p = 1 ou 2, q = 0 ou 1, avec p + q = 2.

2. Formulation de silicone mono- ou bicomposante selon la revendication 1, dans laquelle l'oligodiméthylsiloxane fonctionnalisé présente une des deux formules générales, dans lesquelles m = 10 à 1 000.

3. Formulation de silicone mono- ou bicomposante selon l'une quelconque des revendications 1 à 2, dans laquelle le degré de condensation de l'oligodiméthylsiloxane fonctionnalisé se situe dans la plage allant de 5 à 5 000.

4. Formulation de silicone mono- ou bicomposante selon la revendication 3, dans laquelle le degré de condensation de l'oligodiméthylsiloxane fonctionnalisé se situe dans la plage allant de 10 à 500.

5. Formulation de silicone mono- ou bicomposante selon l'une quelconque des revendications 1 à 4, dans laquelle la formulation de silicone est une formulation de silicone bicomposante, le premier composant comprenant en tant que composant polymère A ledit au moins un polydiorganosiloxane et le deuxième composant comprenant en tant que composant durcisseur B ledit au moins un siloxane oligomère et ledit au moins un oligodiméthylsiloxane fonctionnalisé.

6. Formulation de silicone mono- ou bicomposante selon l'une quelconque des revendications 1 à 5, dans laquelle le polydiorganosiloxane présente à une température de 23 °C une viscosité dans la plage allant de 1 000 à 350 000 mPas, mesurée selon DIN 53018 avec un viscosimètre cône-plaque MCR101 de la société Anton-Paar, Autriche, avec un type de cône CP 25-1 à 23 °C et à un taux de cisaillement de 0,5 s⁻¹.

7. Formulation de silicone mono- ou bicomposante selon l'une quelconque des revendications 1 à 6, dans laquelle le polydiorganosiloxane est un polydiméthylsiloxane à terminaison hydroxy.

8. Formulation de silicone mono- ou bicomposante selon l'une quelconque des revendications 1 à 7, dans laquelle le siloxane oligomère est un produit de condensation d'un ou de plusieurs agents de réticulation silane monomères, et l'agent de réticulation silane monomère est un composé de silane contenant deux ou plus, de préférence trois ou plus, groupes fonctionnels, qui sont choisis parmi les groupes alcoxy, les groupes acétoxy, les groupes oxime, les groupes amino et/ou les groupes N-méthylamido.

9. Formulation de silicone mono- ou bicomposante selon l'une quelconque des revendications 1 à 8, dans laquelle le siloxane oligomère est contenu dans une formulation de silicone monocomposante en une quantité de 0,1 à 25 % en poids, par rapport à la masse totale de la formulation de silicone, et dans une formulation de silicone bicomposante dans le composant durcisseur B en une quantité de 0,5 à 75 % en poids, par rapport à la masse totale du composant durcisseur.

10. Formulation de silicone mono- ou bicomposante selon l'une quelconque des revendications 1 à 9, dans laquelle l'oligodiméthylsiloxane fonctionnalisé est contenu en une quantité de 0,01 à 10 % en poids, par rapport à la masse totale de la formulation de silicone.

11. Formulation de silicone mono- ou bicomposante selon l'une quelconque des revendications 1 à 10, dans laquelle la formulation de silicone est un adhésif ou un agent d'étanchéité.

12. Composant silicone, comprenant :
a) au moins un siloxane oligomère, le siloxane oligomère étant un produit de condensation d'agents de réticulation silane monomères, et
b) au moins un oligodiméthylsiloxane fonctionnalisé, l'oligodiméthylsiloxane fonctionnalisé présentant une des deux formules générales suivantes : 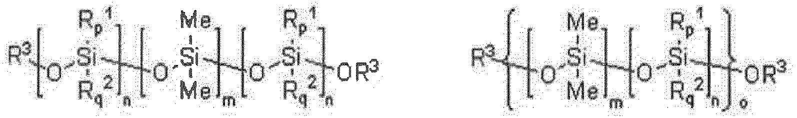 dans lesquelles le substituant Me représente des groupes méthyle,
les R¹ représentent indépendamment les uns des autres un groupe de fonctionnalisation choisi parmi un groupe de formule (1) R^{F}-alkyle, de formule (2) R^{F}-alkyle-Si(R^{S})₂-0-, de formule (3) aminoalkylaminoalkyle ou de formule (4) aminoalkylaminoalkylaminoalkyle, dans les formules (1) à (4), R^{F} étant choisi parmi mercapto, glycidoxy, amino, amido, méthacrylato, carbamato, isocyanato et polyalkylène glycol ; et les R^{S} étant indépendamment les uns des autres un alkyle en C₁-C₄ ou un alcoxy en C₁-C₄, les R² représentent indépendamment les uns des autres alkyle, hydroxy, alcoxy, alkyldiméthylsilyloxy, alkylméthylalcoxysilyloxy ou alkyldialcoxysilyloxy,
R³ représente H ou alkyle, et
m = 5 à 5 000 ; n = 1 à 15, o = 1 à 50, p = 1 ou 2, q = 0 ou 1, avec p + q = 2.

13. Utilisation d'un oligodiméthylsiloxane fonctionnalisé en tant qu'agent de compatibilisation de phases pour un mélange comprenant un polydiorganosiloxane réticulable et un siloxane oligomère en tant qu'agent de réticulation pour le polydiorganosiloxane, le siloxane oligomère étant un produit de condensation d'agents de réticulation silane monomères, l'oligodiméthylsiloxane fonctionnalisé présentant une des deux formules générales suivantes : 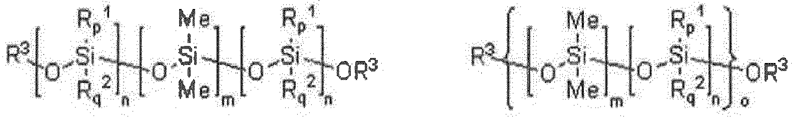 dans lesquelles le substituant Me représente des groupes méthyle,
les R¹ représentent indépendamment les uns des autres un groupe de fonctionnalisation choisi parmi un groupe de formule (1) R^{F}-alkyle, de formule (2) R^{F}-alkyle-Si(R^{S})₂-O-, de formule (3) aminoalkylaminoalkyle ou de formule (4) aminoalkylaminoalkylaminoalkyle, dans les formules (1) à (4), R^{F} étant choisi parmi mercapto, glycidoxy, amino, amido, méthacrylato, carbamato, isocyanato et polyalkylène glycol ; et les R^{S} étant indépendamment les uns des autres un alkyle en C₁-C₄ ou un alcoxy en C₁-C₄, les R² représentent indépendamment les uns des autres alkyle, hydroxy, alcoxy, alkyldiméthylsilyloxy, alkylméthylalcoxysilyloxy ou alkyldialcoxysilyloxy,
R³ représente H ou alkyle, et
m = 5 à 5 000 ; n = 1 à 15, o = 1 à 50, p = 1 ou 2, q = 0 ou 1, avec p + q = 2.

14. Utilisation d'une formulation de silicone mono- ou bicomposante selon l'une quelconque des revendications 1 à 11 en tant qu'adhésif ou agent d'étanchéité.
